# EUROPÄISCHE PATENTANMELDUNG

(11) **EP 3 995 560 A1**
(43) Veröffentlichungstag der Anmeldung: **11.05.2022**
(21) Anmeldenummer: 20000403.4
(22) Anmeldetag: 06.11.2020
(51) Int. Cl.: C10L 5/36, C10L 5/44, C10L 9/08, C10L 5/08

(54) **HERSTELLUNG VON HOLZBRIKETTS AUS ERHITZTEM BUSCHHACKSCHNITZEL FÜR DIE PYROLYSE**

(71) Anmelder: Giese, Karl-Peter, 24103 Kiel (DE)
(72) Erfinder: Giese, Karl-Peter, 24103 Kiel (DE)

(57) **Zusammenfassung**

Die Herstellung von Holzbriketts aus Buschhackschnitzel, die sich für die Pyrolyse eignen, ist bisher an den hohen Rindenanteilen gescheitert Die Presslinge zerfallen und sind nicht transportfähig.

Durch die Erwärmung der Buschhackschnitzel, z. B. durch die Abwärme eines Holzgasmotors, gelingt es mit einem relativ geringen Pressdruck Holzbriketts von etwa 3 Zentimeter im Durchmesser zu erzeugen, die formstabil und transportfähig sind und sich für die Pyrolyse eignen.
In der Anlage werden die Hackschnitzel zunächst erwärmt und über eine Schneckenpresse vorgeformt. Die Endgültige Form erhalten die Briketts durch die hydraulische Presse.

## Beschreibung

Die Herstellung von Holzbriketts aus Buschhackschnitzel, die sich für die Pyrolyse eignen, ist bisher an den hohen Rindenanteilen gescheitert Die Presslinge zerfallen und sind nicht transportfähig.

Durch die Erwärmung der Buschhackschnitzel, z. B. durch die Abwärme eines Holzgasmotors, gelingt es mit einem relativ geringen Pressdruck Holzbriketts von etwa 3 Zentimeter im Durchmesser zu erzeugen, die formstabil und transportfähig sind und sich für die Pyrolyse eignen.
In der Anlage werden die Hackschnitzel zunächst erwärmt und über eine Schneckenpresse vorgeformt. Die Endgültige Form erhalten die Briketts durch die hydraulische Presse.

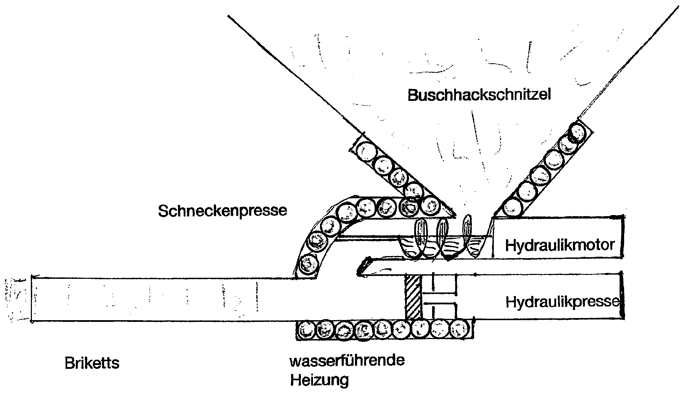

## Patentansprüche

1. Zur Herstellung von Holzbriketts aus Buschhackschnitzel ist eine sehr hoher Pressdruck erforderlich. Alle bisherigen Methoden sind unwirtschaftlich und nicht geeignet, transportfähige Holzbriketts zu erzeugen, die sich für die Pyrolyse eignen.

2. Wird Buschhackschnitzel vor dem Pressen erwärmt, dann können kleinteilige Holzbriketts mit einem niederen Pressdruck hergestellt werden, die von der Festigkeit und Größe für den Transport und die Beschickung einer Pyrolyseeinheit verwenden lassen. Zum Erhitzen wird die Abwärme eines Gasmotors genutzt.
Durch diese Erfindung kann einfacher Buschhackschnitzel zur Pyrolyse verwendet werden.

3. Durch diese Erfindung gewinnt aus das Material Buschhackschnitzel an Wert und eine wirtschaftliche Nutzung zur Erzeugung von Holzgas ist möglich. Allein durch die Herstellung von transportfähigen Holzbriketts unter Verwendung von Hitze eröffnet sich diese Option.

4. .1 Patentanspruch
für die Herstellung von Holzbriketts aus Buschhackschnitzel unter Anwendung von Hitze und Pressdruck
